# EUROPEAN PATENT APPLICATION

(11) **EP 4 844 661 A1**
(43) Date of publication of application: **25.11.2026**
(21) Application number: 25178668.7
(22) Date of filing: 23.05.2025
(51) Int. Cl.: G06Q 30/0645, G06Q 30/0601, G06F 40/186, G06Q 10/0635

(54) **SYSTEM AND AI-ASSISTED METHOD FOR CONFIGURABLE WEIGHTED RENTAL RISK EVALUATION WITH DYNAMIC AFFORDABILITY ADJUSTMENT**

(71) Applicant: TechTeamal B.V., 3029 AD South Holland Rotterdam (NL)
(72) Inventor: The designation of the inventor has not yet been filed

(57) **Abstract**

This invention discloses a modular evaluation platform for rental risk scoring, comprising an administrator-defined configuration layer, document-driven submission flows, and structured evaluator scoring. Administrators create locale-specific evaluation logic by linking location, certificate, and case types with decision groups and document templates, each featuring AI toggles for name extraction, expiration detection, and time-frame validation. Applicants initiate evaluations by submitting documents and declaring a target rent. Submissions are pre-analyzed using AI and evaluated through weighted scoring steps mapped to administrator-defined inputs. Final scores are normalized to a 0-10 scale and may be adjusted dynamically based on rent changes using a bounded transformation formula. The system supports co-applicant score aggregation, certificate-based result sharing, and secure, read-only API access. All logic is preconfigured and auditable, ensuring traceability, scalability, and regulatory compliance without exposing underlying documents.

## Description

### Field of the Invention

The invention relates to digital systems for computing and adjusting individual risk scores using structured evaluator workflows, dynamic score normalization, and modular system architecture. It particularly addresses the technical need for secure, scalable, and privacy-preserving evaluation processes within rental housing applications.

### Background of the Invention

Traditional tenant evaluation methods often rely on raw credit reports, ad hoc document uploads, or opaque automated algorithms. These approaches are prone to bias, lack standardization, and shift data privacy burdens onto landlords and agencies. Applicants are frequently required to re-submit sensitive documents for each application cycle, increasing workload and exposure to misuse. The invention reduces this burden by enabling one-time, secure document submission and eliminating redundant handling through structured, evaluator-guided processes.

Unlike conventional systems controlled by landlords or listing platforms, the described invention provides an applicant-facing evaluation platform that allows individuals to initiate and complete certified risk scoring independently, without relying on third-party gatekeepers.

Evaluators are the only parties with access to the applicant's underlying documents. External stakeholders, such as landlords or agencies, interact exclusively with the certified score and associated metadata. This model eliminates the need for in-person review and replaces inefficient document-heavy processes. Traditionally, landlords may receive high-volume, unstructured documents for a single property, each requiring manual sorting and detailed document review-a process that can take days. The present invention reduces this overhead by presenting only structured, standardized scores and high-level metadata, enabling transparent, rapid comparison and decision-making in a matter of hours. All evaluation logic remains traceable, certified, and privacy-preserving.

The system incorporates an AI-based preprocessing layer that analyzes uploaded documents for structural consistency, metadata completeness, and potential anomalies before human evaluation. This step improves the efficiency, accuracy, and fairness of manual scoring while reducing evaluator workload.

The invention enhances this process through a configurable, platform-based architecture that:
- Enables one-time document submission with locale-specific requirements
- Delegates scoring to certified evaluators using structured forms and decision groups
- Computes a reusable risk score (0-10) from weighted scoring steps
- Applies dynamic score adjustment based on rent variation without reevaluation
- Supports co-applicant scoring through a rent-aware aggregation logic
- Prevents agencies from accessing sensitive applicant documents
- Reduces manual review burden on landlords and agencies by replacing high-volume, unstructured document uploads with standardized, score-based summaries and metadata

### Summary of the Invention

This invention introduces a modular, hybrid system for rental risk scoring, integrating administrator-defined evaluation logic, AI-assisted document preprocessing, and structured manual assessment by certified professionals. The system begins with administrative configuration, wherein platform administrators define locale-specific evaluation flows by linking locations, certificates, case types, document templates, and decision groups. Each document template includes toggles for AI-based validation, enabling checks for name presence, expiration dates, and date range alignment.

Applicants initiate evaluations by uploading required documents and specifying a target rent. Uploaded materials are first pre-analyzed by AI modules before being routed to evaluators through a secure, step-based interface. Evaluators select scoring options from predefined decision groups, and each step contributes to a weighted score based on configuration rules. The total score is normalized to a 0-10 scale and bounded between 3 and 10, ensuring standardization while preserving interpretability.

The final result is issued as a digital certificate containing only the certified score and relevant metadata-excluding all underlying documents. This certificate can be accessed securely via real-time API or a web-based retrieval interface for approved third parties. All evaluation logic is preconfigured, traceable, and audit-ready, supporting trust, regulatory compliance, and operational scalability across rental workflows.

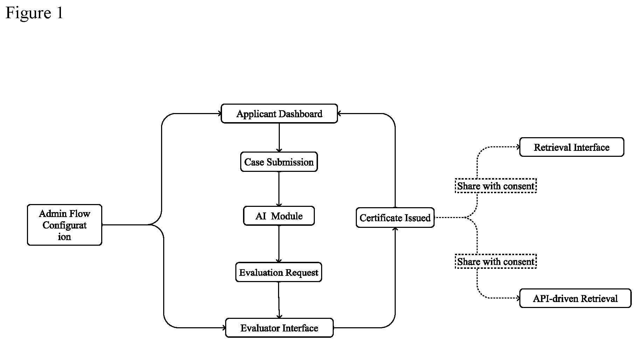

The full system process from applicant input to certificate generation is illustrated in Figure 1.

### Brief Description of the Drawings

Figure 1: System-wide process flow from administrative configuration and applicant submission to evaluator scoring, certificate issuance, and consent-based score retrieval by external systems via interface or API.

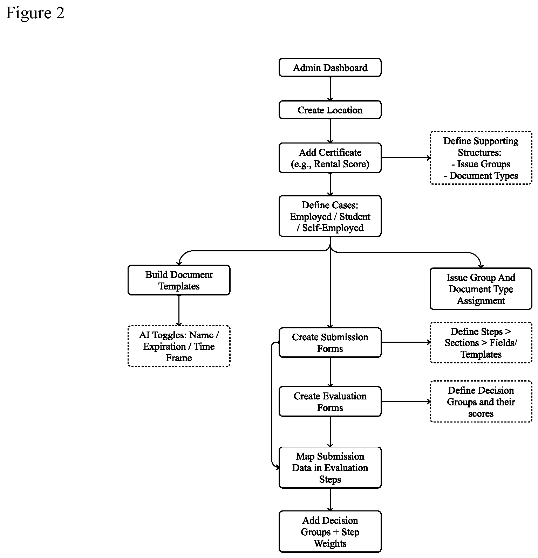

Figure 2: Flow diagram of the administrative configuration process for defining location-based evaluation logic, certificate and case structures, document templates with AI parsing options, and the construction of submission and evaluation forms with decision groups and weight mapping.

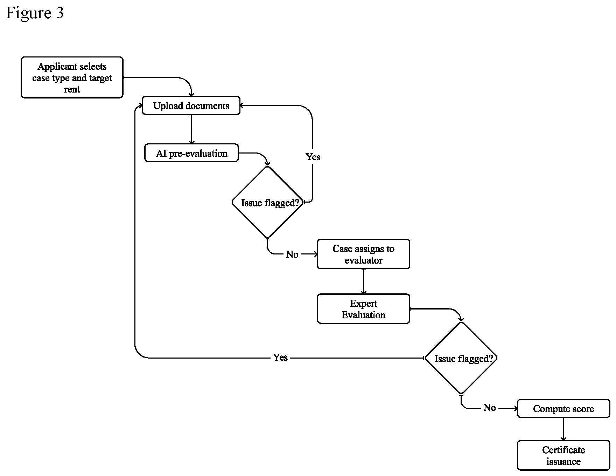

Figure 3: Flow diagram illustrating the case evaluation and issue-handling workflow. The process begins with the applicant selecting a case type and target rent, followed by document upload and AI pre-evaluation. If no issue is flagged, the case proceeds directly to an evaluator. If issues are detected at either the AI or expert review stage, the applicant is prompted to revise the submission. Once all issues are resolved, the evaluator computes the score, and the certificate is issued.

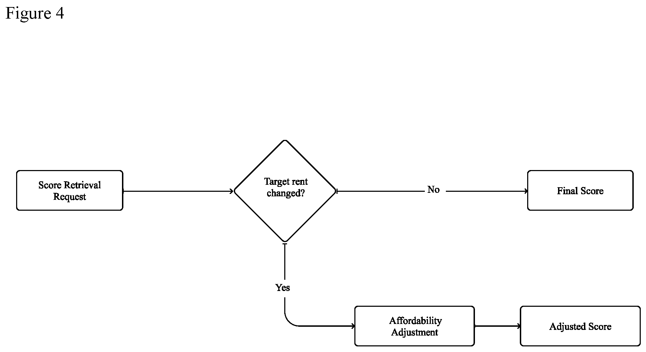

Figure 4: Flowchart depicting the application of the Dynamic Affordability Adjustment. When a score retrieval request is made, the system checks whether the target rent has changed since the original evaluation. If not, the final score is returned. If the rent has changed, the system applies the Dynamic Affordability Adjustment to compute an adjusted score that reflects the new rent amount before returning the result.

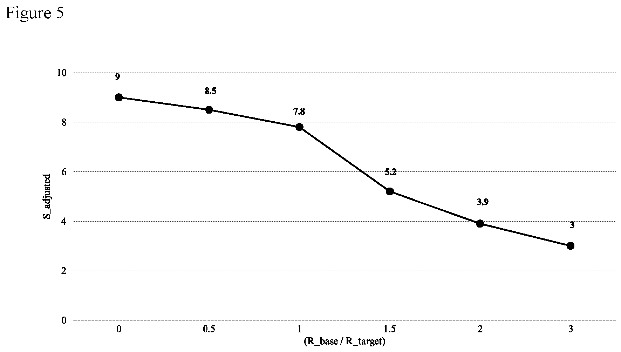

Figure 5: Graph showing the behavior of the Dynamic Affordability Adjustment formula across varying rent ratios. The vertical axis represents the adjusted score (S_adjusted), while the horizontal axis plots the ratio (R_base / R_target). The graph illustrates how scores decrease proportionally when the target rent exceeds the base rent, and how a minimum threshold of 3 is enforced to maintain evaluation integrity.

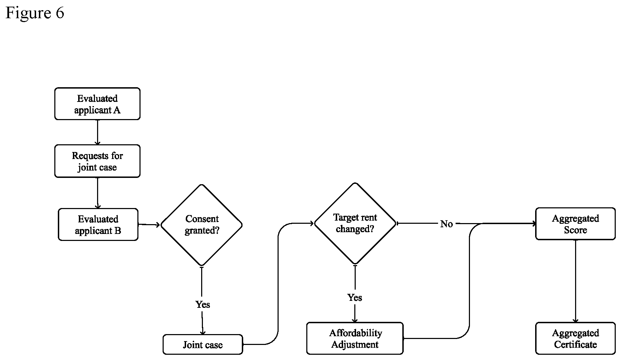

Figure 6: Flowchart illustrating the aggregated scoring workflow. After both applicants are individually evaluated, one initiates a joint score request. If consent is granted by the second applicant, a joint case is established. The system then checks whether the target rent has changed; if so, an affordability adjustment is applied to each score. The adjusted scores are used to compute an aggregated score, which is finalized into an aggregated certificate for use and retrieval.

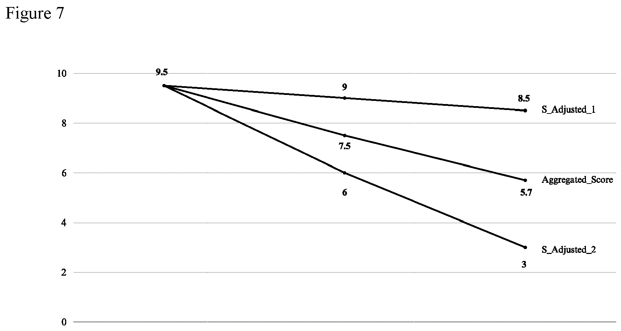

Figure 7: Graph illustrating the relationship between two adjusted scores and the resulting aggregated score in a co-applicant evaluation scenario. The chart shows the decline of individual adjusted scores (S_Adjusted_1 and S_Adjusted_2) and how these are averaged to produce an aggregated score. Original certified scores are not shown; the emphasis is on post-adjustment outcomes used for final certificate generation.

### Terminology Clarification

For clarity throughout this document:
- The term "certificate" refers to the digital document generated upon completion of a manual evaluation, containing the applicant's final score and relevant metadata, but excluding underlying documents.
- The term "case" refers to an individual application submitted by an applicant for evaluation, including all uploaded documents and form responses.
- The term "case type" refers to the classification selected by the applicant that determines the required document set and scoring configuration. Common case types include Employed Individual, Student, and Self-Employed Individual. Each case type defines a distinct evaluation pathway with tailored input steps and applicable decision groups.
- The term "evaluation organization" refers to a certified, GDPR-compliant entity authorized to manage evaluators and conduct manual risk assessments using the platform.
- The term "evaluator" refers to a GDPR-compliant authorized individual who manually reviews submitted cases and selects scoring values using the platform's structured interface.
- The "score retrieval interface for external parties" is a secure, read-only module through which approved third-party stakeholders can view final scores and associated metadata, without access to source documents.
- An "evaluation step" is a section of the evaluation form containing one or more "decision groups," which are administrator-defined sets of scoring options for a specific category.
- The term "affordability" refers to the applicant's financial capacity to pay the rent amount declared, as evaluated through income, employment history, and other financial indicators.

### Admin-Side Configuration and Evaluation Logic Design

The invention includes a comprehensive administrative system that allows certified platform administrators to define, manage, and deploy evaluation logic and document submission pathways across distinct geographical and legal contexts. This system supports multi-lingual configurations, certificate-specific workflows, and localized case structures, enabling scalable and precise customization of rental risk evaluations.

### 1. Location and Locale Management

The admin dashboard enables the creation of a "Location" entity, such as the Netherlands. Upon creation, default supported languages (e.g., Dutch, English) are automatically included, and additional custom locales can be defined. These locales are programmatically inherited by all downstream configuration elements, ensuring that all documents, forms, instructions, and evaluation logic conform to the language and regulatory context of the specified region.

### 2. Certificate and Case Structure

Within each location, administrators can define one or more certificates-such as a "Rental Score." Each certificate supports one or more case types, such as Employed, Self-Employed, or Student. Each case represents a context-specific evaluation path aligned with real-world applicant conditions and risk models.

### 3. Issue Groups and Document Types

Administrators configure "Issue Groups"-collections of related issues, each with multilingual titles, descriptions, and optional guidance links. Separately, "Document Types" (e.g., Permanent Contract, Temporary Agreement) are defined with associated metadata and structural properties. These entities form the foundation for document template creation and reuse across cases.

### 4. Document Templates and Dynamic Controls

Each case is populated with one or more "Document Templates," such as "Proof of Employment" or "Bank Statements." Templates may:
- Support dynamic ranges (e.g., last 3 months)
- Link to predefined issue groups and document types
- Include administrator-defined submission guidelines and validation rules

Templates also include an AI Settings panel, where administrators can toggle document parsing features, such as
- Name recognition
- Expiration date validation
- Time Frame Validation: Enables the system to confirm that internal document dates (e.g., pay slip for June) fall within the required submission window. This enforces alignment between submitted documents and declared time frames.
Document templates may also include restrictions on file type, file size, and guidance content specific to the template.

### 5. Submission Form Construction

Submission forms are constructed hierarchically: Location > Certificate > Case. Each form comprises a set of steps, with each step containing one or more sections. Sections may include input fields (text, numeric, currency, checkbox, radio) or links to document templates. These forms define the exact interface presented to applicants during the submission process.

### 6. Evaluation Form Construction

Evaluation forms are created based on a selected submission form and inherit its structure. Each evaluation form contains multiple evaluation steps, each assigned a weight such that the total form weight equals 1.0. Within each step, administrators configure:
- Step title and description
- Mapped submission data (linked by form step and section)
- One or more Decision Groups

Each Decision Group contains predefined scoring options, each with:
Decision Groups consist of predefined scoring choices, each with:
- A fixed title
- Descriptive guidance
- A numeric score (typically on a 0-10 scale)
- Linked instructional content

The evaluator interface is dynamically populated with this structure during case review, ensuring strict alignment between applicant input and evaluator scoring.

This architecture supports secure, auditable, and locale-aware evaluation model deployment. All forms, templates, and decision logic are modular and extensible across use cases, jurisdictions, and scoring frameworks. The configuration logic described in this section is illustrated in Figure 2.

### Score Computation

The final evaluation score is computed as the sum of individually weighted step scores, each representing a structured assessment unit within the evaluation form. For each step, the evaluator selects scoring options from predefined decision groups, and a normalized step score is calculated based on the evaluator's input, the maximum possible score for that step, and the step's assigned weight.

These step scores are then summed to compute a raw total, which is normalized to a standard 0-10 scale and subsequently bounded between 3 and 10 to maintain interpretability and enforce minimum evaluation thresholds.

This standardized approach ensures consistency across different evaluation forms, applicant types, and evaluators, enabling universal score interpretation and real-time integration with external systems via API. It also supports modularity, allowing evaluation logic to vary by case type while preserving score comparability.

### Step Score

For each step *i*: $Step _ {Score}_{i} = \left({S}_{i}_actual/{S}_{i}_max\right) \times {W}_{i} \times 10$

Where:
- S_{i_}actual is the total score selected by the evaluator in step i, based on one or more decision groups.
- S_{i_}max is the total maximum possible score in that step (e.g., 10, 30, 60), derived from the structure and number of decision groups used.
- Wᵢ is the assigned weight of step *i*, where all step weights across the form sum to 1.0.

This formula normalizes any step-regardless of internal complexity-to a fixed contribution range within the final score.

Step weights (Wᵢ) These weights are configured by administrators during the evaluation form setup, prior to any applicant submission, and are used by evaluators through a fixed input interface. Each weight reflects the relative importance of that step in the overall risk assessment.

The platform enforces a validation rule requiring that the sum of all step weights equals exactly 1.0 before the evaluation form can be published or used. This ensures proportional balance and prevents misconfigured scoring.

Administrators can adjust weights dynamically at any time prior to case submission, allowing flexible configuration for different applicant types, jurisdictions, or evaluation models.

This weighting mechanism guarantees that:
- Each step contributes to the final score according to its intended influence.
- The overall score remains normalized and capped at 10, regardless of how many steps or decision groups are included.
- Scoring stays consistent across evaluators and supports standardized integration with third-party systems via API.

Some decision groups are designed to reward positive applicant history rather than penalize negative behavior directly. For example, rather than assigning negative scores for high-risk outcomes (e.g., evictions), the group assigns a higher score to applicants with a clean rental record, while assigning lower-but non-negative-scores to riskier outcomes. This method maintains score normalization integrity and ensures all decision group outcomes fall within a standardized 0-10 scale, enabling consistent score behavior across all evaluation steps.

This design ensures that:
- Every step contributes proportionally to its defined importance
- Evaluations are consistent, modular, and manually reviewable
- The final score is always within a 0-10 scale

This unified cap promotes consistency across third-party platforms that use API-driven score fetching and across evaluators, and establishes a consistent and scalable model for real-time rental screening.

### Final Score

The final score is computed as the sum of all normalized, weighted step scores. Each evaluation step contributes proportionally based on its assigned weight within the form structure: $Raw _ Score = \sum Step _ {Score}_{i}$

To ensure usability, interpretability, and consistency across all certified outputs, the raw score is then bounded by the system's defined scoring range: $Final _ Score = min \left(10, max\left(3, Raw_Score\right)\right)$

The minimum score of 3 reflects the fact that every applicant has undergone a full evaluation process and has provided, at minimum, a verified identity and a set of valid supporting documents. This lower bound ensures that all final scores represent at least a baseline level of credibility and are suitable for interpretation by third parties such as landlords or agencies.

The use of a raw score followed by bounding ensures that all results remain comparable, standardized, and trustworthy, while preserving the proportional influence of each evaluation step.

### Example: Step-Based Score Calculation

Suppose the evaluation consists of 5 steps with the following configuration:

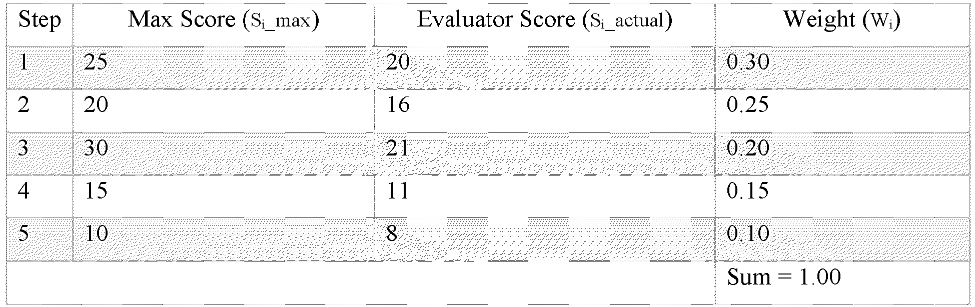

Using the formula: $Step _ {Score}_{i} = \left({S}_{i}_actual/{S}_{i}_max\right) \times {W}_{i} \times 10$

We calculate:
Step 1:$\left(20/25\right) \times 0.30 \times 10 = 0.8 \times 0.30 \times 10 = 2.4$
Step 2:$\left(16/20\right) \times 0.25 \times 10 = 0.8 \times 0.25 \times 10 = 2.0$
Step 3: $\left(21/30\right) \times 0.20 \times 10 = 0.7 \times 0.20 \times 10 = 1.4$
Step 4: $\left(11/15\right) \times 0.15 \times 10 \approx 0.733 \times 0.15 \times 10 = 1.1$
Step 5: $\left(8/10\right) \times 0.10 \times 10 = 0.8 \times 0.10 \times 10 = 0.8$

Raw_Score = Sum of Step_Scoreᵢ $Raw _ Score = 2.4 + 2.0 + 1.4 + 1.1 + 0.8 = 7.7$

Using the final bounding formula: $Final _ Score = min \left(10, max\left(3, Raw_Score\right)\right)$ $Final _ Score = min \left(10, max\left(3, 7.7\right)\right) = 7.7$

### Dynamic Affordability Adjustment

Each score can be adjusted when a score retrieval flow is initiated for a rent amount that differs from the one originally used during evaluation (R_base).

This adjustment, referred to as the Dynamic Affordability Adjustment, proportionally modifies the applicant's finalized evaluator score to reflect affordability under the new rent amount (R_target). The adjustment is applied only after the manual evaluation is complete and does not alter the original certified score. The logic for detecting rent mismatch and applying the adjustment is illustrated in Figure 5.

The Dynamic Affordability Adjustment is only applied after the evaluator's score is finalized and does not replace manual evaluation.

The computing formula is: $S _ Adjusted = min \left(10, max\left(3, S_Original\times \left(R_base/R_target\right)\right)\right)$

Where:
- s_Original = the evaluator-generated score before the Dynamic Affordability Adjustment is applied.
- R_base = the rent amount provided by the applicant at the time of original evaluation and used as the reference point for scoring
- R_target = the new rent amount set by score retrieval flow

The values 3 and 10 serve as scoring boundaries in the Dynamic Affordability Adjustment:
- 10 is the maximum possible score in the system, representing a perfect evaluation result. This ceiling ensures that rent-based improvements do not artificially inflate the score beyond the ideal range.
- 3 is the enforced minimum adjusted score. It was selected based on internal quality thresholds to ensure that certificates remain usable and interpretable by third parties (e.g., landlords or agencies), even in cases where the requested rent significantly exceeds the originally evaluated amount.

This lower boundary acts as a safeguard to:
- Prevent over-penalization from aggressive scaling,
- Preserve trust in the evaluation system,
- Ensure applicants are not entirely excluded from consideration due to minor rent differences,
- And maintain comparability across score outputs.

The following example demonstrates how the Dynamic Affordability Adjustment is applied in real cases, including scenarios where scoring boundaries take effect. The scoring behavior under varying rent ratios is illustrated in Figure 5.

### Example: Application of the Dynamic Affordability Adjustment

For instance, suppose an applicant is evaluated for a rent of €1,500 (R_base) and receives a total evaluator score of 7.8.

The applicant later applies for a property with a rent of €1,800 (R_target). The adjusted score is calculated using the formula: $S _ Adjusted = min \left(10, max\left(3, S_Original\times \left(R_base/R_target\right)\right)\right)$

So: $S _ Adjusted = min \left(10, max\left(3, 7.8\times \left(1500/1800\right)\right)\right) = min \left(10, max\left(3, 6.5\right)\right) = 6.5$ The adjusted score becomes 6.5, which is within the allowed scoring range of 3 to 10.

Now, if the new rent is €4,000: $S _ Adjusted = min \left(10, max\left(3, 7.8\times \left(1500/4000\right)\right)\right) = min \left(10, max\left(3, 2.925\right)\right) = 3.0$ Since the result falls below the minimum threshold, the score is raised to 3.0, enforcing the lower bound.

If the new rent is €1,200: $S _ Adjusted = min \left(10, max\left(3, 7.8\times \left(1500/1200\right)\right)\right) = min \left(10, max\left(3, 9.75\right)\right) = 9.75$ The adjusted score increases to 9.75, staying below the maximum limit.

Finally, if the new rent is €1,000: $S _ Adjusted = min \left(10, max\left(3, 7.8\times \left(1500/1000\right)\right)\right) = min \left(10, max\left(3, 11.7\right)\right) = 10.0$ Since the raw result exceeds the maximum, the score is capped at 10.0, maintaining the upper scoring boundary.

This illustrates how the formula consistently applies the defined scoring boundaries-a minimum of 3 and a maximum of 10-to prevent unfair penalization or inflation based on rent differences.

This ensures:
- The original evaluator score remains central
- Applicants applying for more expensive properties than originally evaluated will see proportional score reductions
- Applicants applying for lower or equal rent maintain or improve their score, capped at 10
- A minimum score of 3 is enforced to avoid extreme penalization
- Affordability is consistently reflected in scoring outcomes while preventing disproportionate penalties

In an optional configuration, the system increases the influence of evaluation steps marked as affordability-sensitive when the requested rent differs from the original amount evaluated. This is achieved by dynamically adjusting the weight of each affordability-sensitive step in proportion to the ratio of the requested rent to the base rent used during the initial evaluation. Steps that are not marked as affordability-sensitive retain their original influence. All weights are then normalized so that the final score remains within the standardized 0-10 scale. This ensures that financial capacity is emphasized proportionally in higher-rent scenarios, while unrelated evaluation areas remain unaffected.

### Aggregated Score for Co-Applicants

If a co-applicant score is needed, the system allows one applicant to initiate a secure request to join their score with another certified user. Upon acceptance, the aggregated score is generated on demand using each participant's adjusted result. This aggregation can be initiated or revoked at any time, preserving the autonomy and data control of each applicant.

To maintain privacy, individual accountability, and regulatory compliance, each applicant must complete their own evaluation case independently. This ensures that identity verification, document submission, and scoring are certified separately for each party.

This workflow reinforces the integrity of the scoring model while upholding user privacy and compliance with data protection principles such as GDPR. The overall aggregated scoring process and consent flow are presented in Figure 6.

In co-applicant scenarios, each applicant may have been evaluated based on a different rent amount. To ensure fairness and consistency, each individual score is first adjusted using the system's Dynamic Affordability Adjustment, relative to a change in the rent amount compared to the applicant's original evaluation.$S _ Adjust = min \left(10, max\left(3, S_Original\times \left(R_base/R_target\right)\right)\right)$ Where:
- S_Original is the evaluator-certified score for the applicant
- R_base is the rent amount used during the original evaluation
- R_target is the rent amount under consideration for joint application

The target rent used for this adjustment may originate from:
- a value declared by the applicant during the aggregated score request,
- an API-driven query,
- or a landlord or platform-side input.

Once both individual scores are adjusted to reflect their certified affordability against the current rent amount, the aggregated score is computed as a simple average: $Aggregated _ Score = \left(S_Adjusted_1+S_Adjusted_2\right) / 2$ Where:
- S_Adjusted_1 is the Dynamic Affordability Adjusted score for Applicant 1
- S_Adjusted_2 is the Dynamic Affordability Adjusted score for Applicant 2

This method ensures that the final combined score truthfully represents both applicants' verified rent capacity in the context of the rental amount currently under consideration.

### Example 1: No Adjustment Needed

Applicant A has a certified score of 6.5 evaluated at €1,500. Applicant B has a certified score of 6.0 evaluated at €1,500. The rent amount for the joint application is €1,500.

Dynamic Affordability Adjustment is not applied, as both applicants were evaluated at the same rent amount they are now jointly applying for.

Adjusted scores: $S _ Adjusted _ 1 = min \left(10, max\left(3, 6.5\times 1500/1500\right)\right) = 6.5$ $S _ Adjusted _ 2 = min \left(10, max\left(3, 6.0\times 1500/1500\right)\right) = 6.0$ $Aggregated _ Score = \left(6.5+6.0\right) / 2 = 6.25$

This reflects a balanced and stable result when both applicants were evaluated under the same conditions as the joint rent request.

### Example 2: Adjustment Applied

Applicant A has a certified score of 8.0 evaluated at €1,500. Applicant B has a certified score of 7.5 evaluated at €1,000. The rent amount for the joint application is €1,500.

Dynamic Affordability Adjustment is applied to Applicant B, who was evaluated for a lower rent than currently requested.

Adjusted scores: $S _ Adjusted _ 1 = min \left(10, max\left(3, 8.0\times 1500/1500\right)\right) = 8.0$ $S _ Adjusted _ 2 = min \left(10, max\left(3, 7.5\times 1000/1500\right)\right) = max \left(3, 5.0\right) = 5.0$ $Aggregated _ Score = \left(8.0+5.0\right) / 2 = 6.5$

This illustrates how the system adjusts individual scores when applicants have different certified affordability levels, ensuring fairness in the final result. The resulting behavior of the adjusted and aggregated scores is illustrated in Figure 7.

### System Implementation

The following section outlines the technical components and architecture used to implement the described evaluation system.
1. The platform includes four distinct but integrated dashboards: one for administrators, one for applicants, one for evaluators, and one for external parties (such as landlords or agencies). Each dashboard is access-controlled and structurally isolated, enabling distinct interaction flows and strict data boundaries between roles. The admin dashboard supports the creation of locale-specific evaluation logic, including documents, decision groups, forms, and scoring weights. The applicant interface enables structured document submission and revision through step-aligned forms. The evaluator dashboard displays dynamically populated case files that mirror the submission structure in real time. The score retrieval interface for external parties enables read-only retrieval and categorization of scores based on property metadata, without access to any underlying documents. This architecture enforces data minimization, preserves evaluation integrity, and supports secure, role-specific access to evaluation outcomes.
2. The administrator-defined configuration layer ensures structural traceability across the entire evaluation process. Every scoring step, weight, and decision group is predefined before any applicant submission, enabling consistent evaluator behavior and full auditability. This design supports regulatory alignment, organizational compliance, and trust in the scoring outcome-contrasting sharply with opaque, AI-only risk systems.
3. The system incorporates a referral engine that allocates applicant cases to human evaluators based on configurable criteria such as expertise, availability, or workload. Submitted documents are collected through dynamic, step-aligned forms and programmatically routed to evaluator dashboards using schema-based data mapping rules that mirror the applicant's structure and enforce strict input-output alignment. Each evaluator interface is populated in real time with structured inputs that reflect the applicant's submission, mirroring the evaluation form structure. This synchronization ensures consistent categorization, streamlined decision-making, and integrity between applicant-side input and evaluator-side scoring logic. Evaluators benefit from a platform-distributed workload with standardized input controls, enabling sustained, compensated engagement in certified digital evaluations. An AI-based document preprocessing system incorporates technologies such as Optical Character Recognition (OCR), Named Entity Recognition (NER), Automated Document Reading (ADR), and transformer-based language models (e.g., BERT) to enhance document parsing, metadata extraction, and anomaly detection.
4. Frontend: React.js, React Native
5. Backend: NestJS (Node.js framework), MongoDB, PostgreSQL
6. Security: AES-256 encryption for data at rest, TLS for data in transit, and role-based access control for platform segmentation.
7. Hosting: Hetzner, GDPR-compliant

### Manual Evaluation Workflow

While the platform uses AI-based preprocessing to assist with document analysis and flagging, all scoring decisions within the manual evaluation workflow are made by certified human evaluators through a structured interface configured in advance by platform administrators.
1. The applicant selects a case type and specifies the target rent amount, then uploads the required documents through a dynamic, step-aligned submission form.
2. Documents are pre-evaluated by an AI-based document analysis system configured via administrator-configurable settings to perform checks such as consistency, completeness, date range validation, and name or expiration detection.
3. If an issue is flagged by either the AI or the evaluator, the applicant is notified via the integrated notification system (in-app, push, and email) and can revise or supplement the submission. The full document flow and issue-handling logic are shown in Figure 3, including the AI preprocessing and revision loop.
4. The referral engine initially routes the case to an evaluation organization based on configurable criteria such as expertise, jurisdiction, or availability. Within the organization, cases are assigned to individual evaluators by administrative users, supporting structured workload management and role-based control.
5. The evaluator reviews a real-time, dynamically populated dashboard that mirrors the applicant's submission form structure, including time-sensitive document sections such as recent pay slips or bank statements.
6. The evaluator selects score values from predefined decision groups through a structured, access-restricted interface. The interface enforces standardized inputs, prohibits free-form entries, and incorporates validation logic to ensure traceability and consistency across evaluations. The applicant's declared target rent is presented contextually, serving as the financial benchmark for affordability-related scoring steps.
7. The system computes the raw evaluation score immediately. This score is normalized, bounded, and issued in the form of a digital certificate.
8. The applicant can share this certificate via the score retrieval interface for external parties, who may view the result and categorize it by property metadata, without accessing the underlying documents.
9. If the certificate is retrieved in the context of a rent value different from the original evaluation, the system applies the Dynamic Affordability Adjustment formula to proportionally adjust the score while maintaining defined bounds between 3 and 10.

### Platform Features

The platform includes a range of configurable system components designed to support secure, scalable, and evaluator-driven risk assessments through administrator-defined workflows and modular architecture:
- Multi-model scoring engine supporting multiple applicant types
- Fully dynamic administrative interface for creating and managing evaluation processes, scoring steps, weights, and decision group logic
- Affordability-sensitive score adjustment using a bounded transformation formula
- API-integrated score sharing and certificate verification for third-party access
- Configurable certificate validity periods (e.g., 1-3 months)
- API throttling controls for regulating application intake based on certified applicant score thresholds

### Conclusion

This invention presents a modular, evaluator-driven, and administrator-configured scoring platform designed for secure, privacy-preserving risk assessments across varying applicant types. By enabling structured evaluations through preconfigured forms and decision groups-without exposing underlying documents-the system streamlines workflows, ensures data minimization, and accelerates trust-based decision-making.

For applicants, it provides a one-time document submission experience with transparent evaluation outcomes. For evaluators, it offers a guided scoring environment grounded in predefined, auditable logic. For administrators, the platform delivers a fully configurable interface for constructing evaluation flows, document rules, and AI-assisted preprocessing behaviors. For real estate and agency stakeholders, it enables read-only, certificate-based access to certified scores via API or web interface-supporting automation without compromising privacy.

## Claims

1. An administrative configuration system, comprising a user interface that enables the creation of location-based evaluation structures, wherein each location supports one or more certificates, each certificate supports one or more case types, and all entities inherit locale-specific configurations including language, formatting, and regulatory constraints.

2. A document classification system, wherein administrators define issue groups and document types independently, each with localized metadata, and subsequently link them to document templates used in applicant evaluations.

3. A document template engine, wherein each template supports toggleable AI preprocessing rules configured by administrators, the rules including but not limited to: name recognition, expiration date validation, and time-frame analysis.

4. A document time-frame validation mechanism, wherein the AI preprocessing module confirms that date values within submitted documents fall within the expected submission period, based on the declared time scope for the template.

5. A submission form builder, wherein administrators construct multi-step forms composed of sections and input fields or document templates, said forms being contextually linked to a specific location, certificate, and case type, and rendered to applicants during the evaluation process.

6. An evaluation form construction system, wherein each evaluation form is created in relation to a submission form, and composed of multiple weighted evaluation steps, each step referencing one or more mapped data sources from the applicant's submission.

7. A decision group engine, wherein administrators define scoring logic in the form of decision groups, each group consisting of multiple options with predefined titles, descriptions, numeric scores, and instructional content for evaluator guidance.

8. A dynamic document submission system, wherein administrators define document period rules (e.g., "most recent three months"), and the applicant-facing interface dynamically adjusts input prompts and submission requirements based on the submission date, such that evaluators receive forms pre-aligned with administratively configured time periods.

9. An AI-based preprocessing module, operable to assess submitted documents for consistency, completeness, and anomaly detection using technologies including Optical Character Recognition (OCR), Named Entity Recognition (NER), and transformer-based models.

10. A feedback and revision system, wherein flagged document issues are presented to applicants via notifications, allowing for targeted revision or resubmission, with the updated documents re-entering the evaluator workflow.

11. A synchronized evaluator interface, populated in real-time with structured inputs derived from applicant submissions, said interface enforcing structured access controls and maintaining alignment with the submission form structure.

12. A dynamic affordability adjustment mechanism, comprising a post-evaluation function that modifies a certified score based on the ratio between the rent evaluated and a newly requested rent, according to the formula: S_Adjusted = min(10, max(3, S_Original × (R_base / R_target))).

13. An aggregated scoring method, wherein two or more adjusted scores from independently certified applicants are averaged to produce a joint aggregated score applicable to co-applicant cases.

14. A certificate-based sharing method, wherein only the final evaluation score and accompanying metadata are exposed to external parties via a digital certificate, without access to underlying documents or personal applicant data.

15. A secure external retrieval interface, providing read-only access to certified evaluation scores by approved third-party systems, accessible via web or API, with no exposure to document content or evaluator-side data.
